# EUROPEAN PATENT SPECIFICATION

(11) **EP 2 922 330 B1**
(45) Date of publication and mention of the grant of the patent: **02.12.2020**
(21) Application number: 14360007.0
(22) Date of filing: 20.03.2014
(51) Int. Cl.: H04W 16/28, H04W 84/04, H04W 16/16

(54) **Method for selecting an antenna pattern, node, network, and computer program product**
Verfahren zur Auswahl eines Antennenmusters, Knoten, Netzwerk, und Computerprogrammprodukt
Procédé de sélection d'un modèle d'antenne, noeud, réseau, et produit de programme informatique

(43) Date of publication of application: 23.09.2015
(73) Proprietor: Alcatel Lucent, 91620 Nozay (FR)
(72) Inventor: Claussen, Holger, 15 Dublin (IE); Razavi, Rouzbeh, 15 Dublin (IE)
(74) Representative: Lichota, Catherine Margaret Timmis

(56) References cited:
- EP-A1- 2 161 851
- EP-A1- 2 506 625
- GB-A- 2 475 392
- US-A1- 2010 173 610
- US-A1- 2011 009 105

## Description

### TECHNICAL FIELD

The present invention relates, in general, to telecommunications networks, and more specifically, although not exclusively to improving received signal quality within such networks.

### BACKGROUND

Small cell networks, by virtue of their reduced coverage range, low cost and high performance, are a potentially industry-changing disruptive shift in technology for radio access in cellular networks. Their coverage range implies that the spectrum efficiency that can be attained is much greater than that achievable using macrocells alone. In addition, the low costs associated with small cells means they can be deployed as consumer equipment, effectively reducing the capital load and operating expenses of the host network. Further, owing to the enhanced link budgets due to the close proximity of the transmitter and the receiver, improved services and higher data rates can be realised. While operating small cells on a dedicated frequency is possible, co-channel operation with an existing macrocellular network is more technically challenging, but is also more rewarding for operators due to the potentially significantly increased spectral efficiency per area through spatial frequency re-use. For outdoor small cell deployments, co-channel operation is more challenging. The optimal configuration of small cells when deployed on the same frequency as an underlying macrocell is of great importance. Moreover, with dense future deployment of such cells, inter-small cell interference could also be significant and require cells to be configured optimally. Typically however, small cells are deployed without prior planning, and so although they potentially improve network-wide performance, their deployment can also result in increased interference.

EP2161851 describes a system for finding the best average antenna pattern in terms of coverage for a residential building. EP2506625 describes a system for controlling a reception pattern of a femtocell using ranked antenna patterns. US2011/0009105 describes a self-organising network.

### SUMMARY

According to an example, there is provided a method, in a telecommunications network, for improving received signal quality at a user equipment, UE, device, comprising receiving, at a node of the network, a candidate radio frequency, RF, signature of the UE representing a measurement report for the UE and including data representing signal quality of received transmissions at the UE from the node (303) and other neighbouring nodes of the UE, using the candidate RF signature to select an antenna pattern from a set of selectable antenna patterns of an antenna of the node, respective ones of which are mapped to RF signatures, and modifying a transmission profile of the antenna using the selected antenna pattern. Selecting an antenna pattern can include comparing the candidate RF signature against a set of existing RF signatures to determine a candidate match. The selected antenna pattern can be the pattern that provides a maximum signal-to-interference-plus-noise ratio measure at the UE that is being served by the node. An antenna pattern is selected when a confidence metric associated with respective ones of the set of selectable antenna patterns and representing a measure of certainty that an antenna pattern is optimal for the candidate RF signature is greater than a predetermined threshold value. Selecting an antenna pattern can include cycling through the selectable antenna patterns of the antenna in order to determine an antenna pattern for the UE providing maximum signal strength from the node. The determined antenna pattern can be mapped to or otherwise associated with the candidate RF signature of the UE and provided as an entry for a set mapping RF signatures to corresponding antenna patterns. The node can be operable to serve more than one UE, and wherein an antenna pattern is selected on the basis of multiple RF signatures received at the node corresponding to the multiple UEs. An omni-directional mode of operation for the antenna can be selected when the number of UEs served by the node exceeds a predetermined threshold value. An omni-directional mode of operation for the antenna can be selected when the number of individual antenna patterns to be combined to serve all users exceeds a predetermined threshold value.

According to an example, there is provided a node in a telecommunications network, the node including an antenna comprising multiple antenna elements with respective different beam directionality profiles, wherein the node is operable to receive a candidate RF signature of a UE device representing a measurement report for the UE and including data representing signal quality of received transmissions at the UE from the node and neighbouring nodes of the UE, use the candidate RF signature to select an antenna pattern from a set of selectable antenna patterns of the antenna, respective ones of which are mapped to RF signatures by selecting one or more antenna elements for use. The node can further be operable to cycle through the selectable antenna patterns of the antenna to determine an antenna pattern for the UE providing maximum signal strength from the node or a maximum signal-to-interference-plus-noise ratio measure at the UE that is being served by the node. The node can further be operable to map the determined antenna pattern to the candidate RF signature of the UE and provide the determined antenna pattern as an entry for a set mapping RF signatures to corresponding antenna patterns. An antenna pattern is selected when a confidence metric associated with respective ones of the set of selectable antenna patterns and representing a measure of certainty that an antenna pattern is optimal for the candidate RF signature is greater than a predetermined threshold value

According to an example, there is provided an antenna for use in a node of a telecommunications network, the antenna comprising multiple antenna elements with respective different beam directionality profiles, wherein the antenna is operable to implement an antenna pattern from a set of selectable antenna patterns of the antenna by selecting one or more antenna elements for use dependent on a candidate RF signature of a UE device of the network representing a measurement report for the UE and including data representing signal quality of received transmissions at the UE from the node and/or neighbouring nodes of the UE. An antenna pattern is selected when a confidence metric associated with respective ones of the set of selectable antenna patterns and representing a measure of certainty that an antenna pattern is optimal for the candidate RF signature is greater than a predetermined threshold value

According to an example, there is provided a telecommunications network comprising at least one node with an antenna comprising multiple antenna elements with respective different beam directionality profiles, wherein the at least one node is operable to receive a candidate RF signature of a UE device of the network representing a measurement report for the UE and including data representing signal quality of received transmissions at the UE from the at least one node and/or neighbouring nodes of the UE within the network, and use the candidate RF signature to select an antenna pattern from a set of selectable antenna patterns of the antenna, respective ones of which are mapped to RF signatures by selecting one or more antenna elements for use. An antenna pattern is selected when a confidence metric associated with respective ones of the set of selectable antenna patterns and representing a measure of certainty that an antenna pattern is optimal for the candidate RF signature is greater than a predetermined threshold value

According to an example, there is provided a computer program product, comprising a computer usable medium having computer readable program code embodied therein, said computer readable program code adapted to be executed to implement a method for improving received signal quality at a user equipment (UE) device as provided herein.

According to an example, a telecommunications network as described herein can be a heterogeneous telecommunications network.

### BRIEF DESCRIPTION OF THE DRAWINGS

Embodiments will now be described, by way of example only, with reference to the accompanying drawings, in which:
Figures 1a-d are schematic representations of four scenarios in which a small cell is deployed on the same carrier as the underlying macrocell;
Figures 2a-b are schematic representations of two designs for switched multi-element antenna systems according to an example;
Figure 3 is a schematic representation of a part of a telecommunications network according to an example;
Figure 4 is a schematic representation of a real life deployment scenario according to an example;
Figure 5 is a graph showing the misclassification rate versus size of the training set for four different classification methods when measurement errors are additionally considered according to an example;
Figure 6 is a graph depicting a misclassification rate versus the number of visible cells for a UE according to an example; and
Figures 7a-b are graphs depicting the performance gain of a multi element antenna (MEA) scheme over existing ODA systems, in which a) depicts CDF of users' SINR and b) depicts CDF of users' throughput according to an example.

### DESCRIPTION

The invention is captured in the appended claims.

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

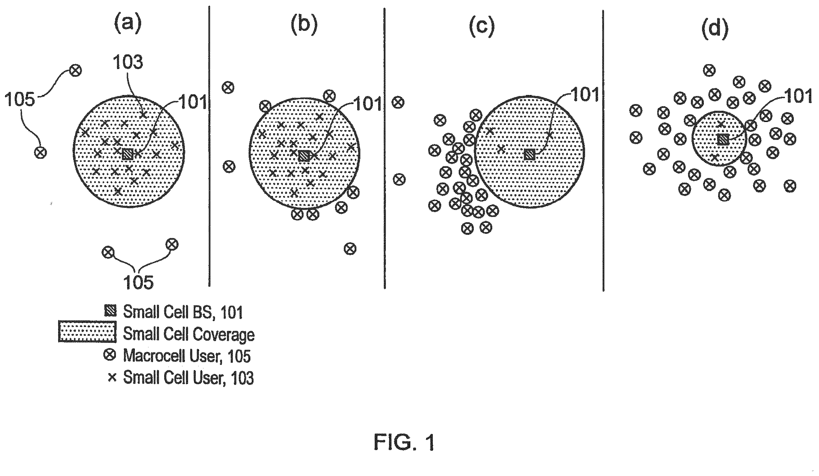

In general, if the offloading gain from a small cell base-station is less significant compared to its interference impact, the small cell base-station can be considered as a burden on the network. Figures 1a-d are schematic representations of four scenarios in which a small cell is deployed on the same carrier as the underlying macrocell. As used herein, a "basestation" is considered a node of a telecommunications network, having a corresponding (macro or, as the case may be metro, small or other) cell. It will be appreciated that the node may comprise a basestation alone or incorporate it with other devices.

Figure 1a depicts a case where small cell 101 can offload large number of users 103 without imposing significant interference to macrocell users 105. The case shown in Figure 1b is less ideal but can be considered broadly acceptable. Here, although there are a number of macrocell users 105 at the edge of the small cell 101 which may be affected by the interference from the small cell, the offloading gain of the small cell is still significant. The improper placement of small cell in figure 1c results in many macrocell users 105 being affected by small cell 101 whilst the users' capture rate is insignificant. Finally, mal-configuration of the small cell coverage settings (e.g. pilot power) in Figure 1d results in marginal offload gain and considerable interference imposed to large number of user.

According to an example, performance issues relating to the sub-optimal deployment of small cells are addressed using a multi-element antenna solution with a self-optimization method. Improvements relating to interference of small cell networks, and an increase in the flexibility of their deployment locations are thus provided. According to an example, multi-element antennas are deployed at or otherwise incorporated as part of small cell basestations. An antenna pattern selection for the small cell is a determined using the radio frequency (RF) fingerprints of the users being served by the basestation and an optimal antenna pattern can be selected. According to an example, a basestation requires no more than a single transmitter chain, therefore making the solution cost efficient and suitable for large scale deployments of small cells.

With on omnidirectional antenna (ODA), a basestation can only interact with its environment is by way of power adjustment. Alternatively, in order to benefit from beam directionally whilst keeping complexity and cost at a minimum, a basestation can be equipped with multiple antenna elements with respective distinct directional gain patterns. A switch can be used to select a single element or a combination of antenna elements in order to modify the antenna pattern. For example, a number of patch antennas can be used, each being selectable so that various combinations of antenna pattern can be provided.

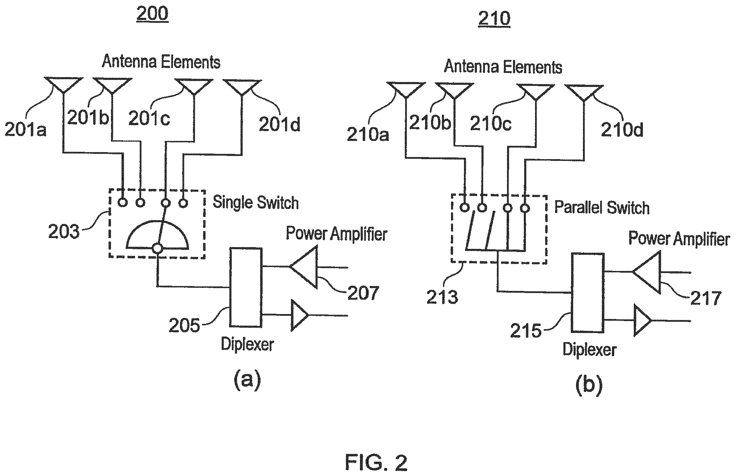

Figures 2a-b are schematic representations of two designs for switched multi-element antenna systems according to an example, which can be used in a basestation such as a small cell basestation for example. With reference to figure 2a, multiple antenna elements 201a-d are provided and coupled to a single switch 203. A diplexer 205 and power amplifier 207 are provided as shown. One of the antenna elements 201a-d can be selected using switch 203, thereby altering the antenna pattern of the antenna system 200. Typically, since each antenna element will have a distinct directional gain pattern, selecting one element 201a-d results in a specific directional gain pattern for the system 200.

With reference to figure 2b, multiple antenna elements 210a-d are provided and coupled to a parallel switch 213. A diplexer 215 and power amplifier 217 are provided as shown. A combination of two of the antenna elements 211a-d can be selected using parallel switch 213, thereby altering the antenna pattern of the antenna system 210. As before, since each antenna element will have a distinct directional gain pattern, selecting a pair of elements 211a-d results in a specific directional gain pattern for the system 210. Each system 200, 210 therefore has multiple selectable antenna elements that can be selected in isolation or combination to form multiple different selectable antenna element patterns.

Using an antenna system in a basestation, such as a small cell basestation, can therefore help to mitigate interference between basestations in view of, for example, sub-optimal deployment of the same. According to an example, an antenna pattern of a basestation can be selected in a multi antenna element system using RF finger prints (or signatures) of user equipment (UE) devices in range of the basestation. An optimal antenna pattern can be determined for each UE.

An RF signature of a UE comprises a measurement report indicating received signal quality at the UE from any neighbouring cells. As a routine part of their operation, UEs periodically send such measurement reports indicating the received signal strength of their own (serving) and neighbouring cells to their serving basestation. In addition, a basestation can explicitly request UEs to perform and report measurements where it can additionally specify the measurements' characteristics. These measurement reports are used when making handover decisions for a UE. Thus, in an example, collecting RF signatures does not require additional or non-standard operations or overheads. Signal quality can include a measure of signal strength or a signal to interference plus noise ratio for example.

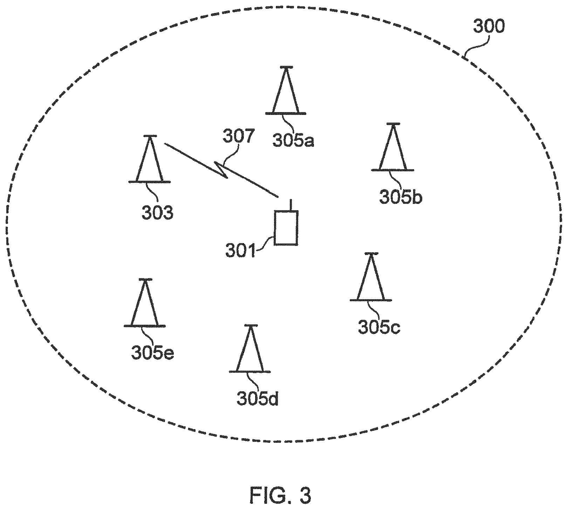

Figure 3 is a schematic representation of a part of a telecommunications network according to an example. A UE 301 is being served by a basestation node 303, such as a small cell basestation. Multiple other small cell basestation nodes 305a-e are provided within the range of UE 301. As noted above, UE 301 periodically transmits a measurement report 307 to its serving cell (basestation 303) indicating the received signal strength from basestation 303 and the neighbouring basestations 305a-e. The measurement report 307 represents an RF signature of UE 301. As UE roams within the network 300, its position changes, and thus the received signal strength from its serving basestation and neighbouring basestations changes. Accordingly, the RF signature of UE 301 varies based on the position of the UE 301 in the network.

According to an example, a basestation node can associate or map respective received RF signatures reported by UEs to optimal antenna element patterns. This can be done by employing a supervised classification technique for example. More specifically, in an exploration phase in which, upon reception of a set of measurements from a UE (i.e. an RF signature sample), a basestation with multiple selectable antenna elements cycles through all antenna patterns in order to select an antenna pattern for the RF signature in question, and the UE that provided the signature.

In an example, the selected antenna pattern for the RF signature is the optimal antenna pattern from the selectable patterns for the basestation that results in, for example, maximum signal strength for the UE in question from the basestation and/or maximum signal-to-interference plus-noise ratio (SINR). The optimal antenna pattern can be associated/mapped as the optimal antenna pattern for the RF signature in question. This can be repeated for each received RF signature from a UE or UEs in order to map multiple RF signatures to respective optimal antenna patterns of the basestation. Cycling through antenna patterns can include considering each pattern in turn, or considering patterns in a random order for example.

Once sufficient number of signature samples are collected, the basestation node can use different classification techniques to estimate the optimal pattern for a new UE without the need to try all possible antenna patterns as was done in an exploration phase. That is, during an exploration phase, a set of records for a basestation can be generated comprising multiple RF signatures mapped to corresponding optimal antenna patterns. In an example, the number of records can be capped at a predetermined maximum number. Alternatively, for example, cross-validation can be used on the set in order to determine the effectiveness of the set in being able to select an optimal antenna pattern for a new RF signature from a UE. If an optimal pattern cannot be determined, or a confidence measure associated with a determined pattern is below a predefined minimum threshold value for example, then exploration can continue in order to augment the set of records. A mode of operation of a basestation in which exploration has ceased can be termed an exploitation mode.

It is possible to have more than one active user in a cell and thus the small cell basestation may require different antenna patterns to optimally serve each of them. In such a case, a parallel switch arrangement such as depicted in figure 1b enables the basestation to select more than one antenna element simultaneously. In certain instances however, due to increased impedance mismatch and return losses, a combination of antenna elements may return a sub-optimal performance.

According to an example, a basestation can reject predictions for an optimal antenna pattern based on a received RF signature for a UE where predictions are made with low confidence. An estimator can additionally provide a measure of certainty behind a prediction. Performance can thus be further improved if predictions with low confidence are ignored and the basestation instead explicitly explores all antenna pattern option for such cases. As an example, a measure of certainty for a k nearest neighbours (k-nn) classifier can be the weighted ratio of the number of neighbours with the k neighbours who agree with the final classification decision. Simulations were performed to confirm the feasibility of the proposed algorithm and to additionally quantify the improvement gains.

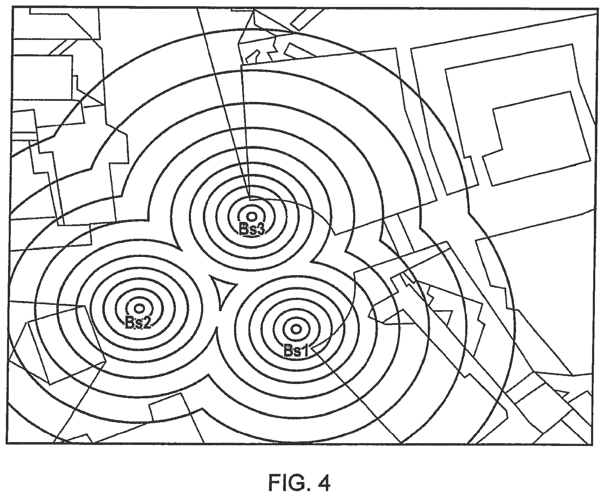

Figure 4 is a schematic representation of a real life deployment scenario according to an example. More specifically, the Stachus square, which is a large typically crowded shopping area in central Munich, Germany is depicted in plan view. The simulation area is 300x300m large and consists of three small cell basestations BS1, BS2 and BS3 deployed around the square as shown. Additionally, a macrocell basestation was considered.

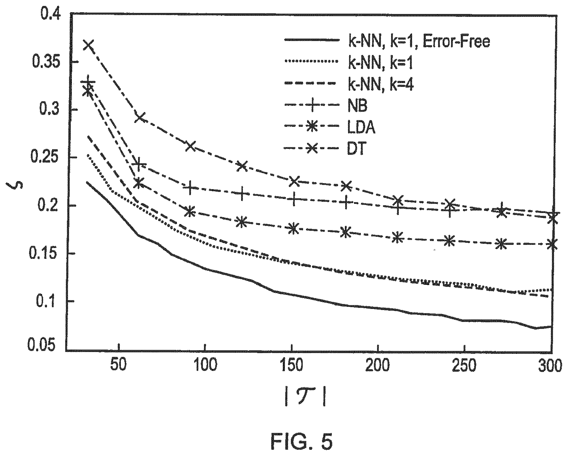

Simulations show that with 300 training samples, the estimation accuracy is around 90% when an appropriate classification method is used. In addition, from four major classification methods used and tested, namely : k-Nearest Neighbour (k-NN), Naive Bayes (NB) classifier, Linear Discriminant Analysis (LOA) and Decision Tree (DD classifiers, K-NN is shown to outperform the other (see for example Figure 5, which is a graph showing the misclassification rate versus size of the training set for the four different classification methods when measurement errors are additionally considered.

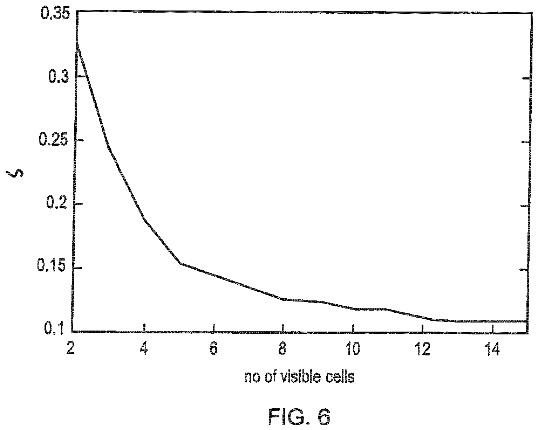

Moreover, the method as described herein performs well with even relatively few visible neighbouring cells (such as 4-5 for example). Figure 6 is a graph depicting a misclassification rate versus the number of visible cells for a UE.

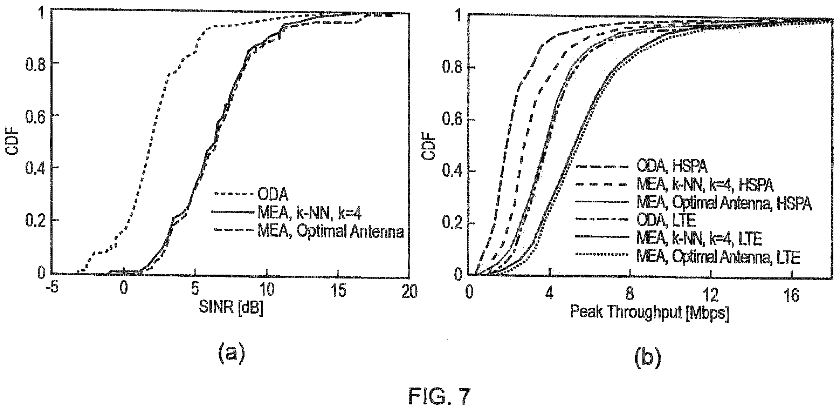

Compared to a typical basestation comprising a single ODA, the process and systems described herein can provide a 5.1 dB improvement in downlink SINR, which can be translated to a 72% throughput improvement gain. Figures 7a-b are graphs depicting the performance gain of the present multi element antenna (MEA) scheme over existing ODA systems, where a) depicts CDF of users' SINR and b) depicts CDF of users' throughput.

According to an example, the deployment of multi-element antennas in small cell basestations can therefore be used for interference mitigation. More specifically, antenna pattern selection for as MEA can be used in order to enable a basestation to determine and use an optimal antenna pattern based on the RF signature of the UEs and using previous observations that have been used to develop a training set. This approach can significantly improve the performance of small cell deployments if they are deployed in sub-optimal locations, which in real deployments happens often due to deployment constraints and limitations in backhaul and power availability for example.

This therefore provides an attractive and straightforward way to mitigate interference and improve users' SINR (and throughput respectively) in a network scenario. The method and system is fully standard compliant and can be applied to a wide range of wireless access technologies including WCDMA, HSDPA and LTE for example. Given the future dense deployment of small cells, there will be the need for a solution that con address the interference issue effectively.

The described embodiments are to be considered in all respects as illustrative and not restrictive. In particular, the scope of the invention is indicated by the appended claims rather than by the description and figures herein.

## Claims

1. A method, in a telecommunications network (300), for improving received signal quality at a user equipment, UE, device (301), comprising:
receiving, at a node (303) of the network (300), a candidate radio frequency, RF, signature of the UE (301) representing a measurement report for the UE (301) and including data representing signal quality of received transmissions at the UE from the node (303) and other neighbouring nodes (305a-e) of the UE (301);
using the candidate RF signature to select an antenna pattern that provides a maximum signal-to-interference-plus-noise ratio measure at the UE (301) that is being served by the node (303) from a set of selectable antenna patterns of an antenna (200, 210) of the node (303), respective ones of which are mapped to RF signatures; and
modifying a transmission profile of the antenna (200, 210) using the selected antenna pattern, wherein an antenna pattern is selected when a confidence measure associated with respective ones of the set of selectable antenna patterns, and representing a measure of certainty that an antenna pattern is optimal for the candidate RF signature, is greater than a predetermined threshold value.

2. A method as claimed in claim 1, wherein selecting an antenna pattern includes comparing the candidate RF signature against a set of previous RF signatures to determine a candidate match.

3. A method as claimed in claim 1, wherein selecting an antenna pattern includes cycling through the selectable antenna patterns of the antenna (200, 210) in order to determine an antenna pattern for the UE (301) providing maximum signal strength from the node (303).

4. A method as claimed in claim 3, wherein the determined antenna pattern is mapped to the candidate RF signature of the UE (301) and provided as an entry for a set mapping RF signatures to corresponding antenna patterns.

5. A method as claimed in any preceding claim, wherein the node (303) is operable to serve more than one UE, and wherein an antenna pattern is selected on the basis of multiple RF signatures received at the node (303) corresponding to the multiple UEs.

6. A method as claimed in claim 5, further comprising selecting an omni-directional mode of operation for the antenna (200, 210) when the number of UEs served by the node (303) exceeds a predetermined threshold value.

7. A method as claimed in claim 6, further comprising selecting an omni-directional mode of operation for the antenna (200, 210) when the number of individual antenna patterns to be combined to serve all users exceeds a predetermined threshold value.

8. A node (303) in a telecommunications network (300), the node including an antenna (200, 210) comprising multiple antenna elements (201a-d; 210a-d) with respective different beam directionality profiles, wherein the node (303) is operable to:
receive a candidate RF signature of a UE device (301) representing a measurement report for the UE (301) and including data representing signal quality of received transmissions at the UE (301) from the node (303) and neighbouring nodes (305a-e) of the UE (301);
use the candidate RF signature to select an antenna pattern that provides a maximum signal-to-interference-plus-noise ratio measure at the UE (301) that is being served by the node (303) from a set of selectable antenna patterns of the antenna (200, 210), respective ones of which are mapped to RF signatures by selecting one or more antenna elements for use, wherein an antenna pattern is selected when a confidence measure associated with respective ones of the set of selectable antenna patterns, and representing a measure of certainty that an antenna pattern is optimal for the candidate RF signature, is greater than a predetermined threshold value.

9. A node (303) as claimed in claim 8, further operable to cycle through the selectable antenna patterns of the antenna (200, 210) to determine an antenna pattern for the UE (301) providing maximum signal strength from the node (303) or a maximum signal-to-interference-plus-noise ratio measure at the UE (301) that is being served by the node (303).

10. A node (303) as claimed in claim 9, further operable to map the determined antenna pattern to the candidate RF signature of the UE and provide the determined antenna pattern as an entry for a set mapping RF signatures to corresponding antenna patterns.

11. A telecommunications network (300) comprising at least one node (303) with an antenna (200, 210) comprising multiple antenna elements (201a-d; 210a-d) with respective different beam directionality profiles, wherein the at least one node (303) is operable to:
receive a candidate RF signature of a UE device (301) of the network (300) representing a measurement report for the UE (301) and including data representing signal quality of received transmissions at the UE from the at least one node (303) and neighbouring nodes (305a-e) of the UE (301) within the network (300); and
use the candidate RF signature to select an antenna pattern that provides a maximum signal-to-interference-plus-noise ratio measure at the UE (301) that is being served by the node (303) from a set of selectable antenna patterns of the antenna (200, 210), respective ones of which are mapped to RF signatures by selecting one or more antenna elements for use, wherein an antenna pattern is selected when a confidence measure associated with respective ones of the set of selectable antenna patterns, and representing a measure of certainty that an antenna pattern is optimal for the candidate RF signature, is greater than a predetermined threshold value.

12. A computer program product, comprising a computer usable medium having computer readable program code embodied therein, said computer readable program code adapted to be executed on a computer to implement a method for improving received signal quality at a user equipment, UE, device (301) as claimed in any of claims 1 to 7.

## Patentansprüche

1. Verfahren in einem Telekommunikationsnetz (300) zum Verbessern einer Empfangssignalqualität an einer Benutzergerät-, UE, -Vorrichtung (301), umfassend:
Empfangen einer Kandidaten-Hochfrequenz-, HF, -Signatur des UE (301), das einen Messbericht für das UE (301) darstellt und Daten enthält, die eine Signalqualität empfangener Sendungen am UE vom Knoten (303) und anderen benachbarten Knoten (305a-e) des UE darstellen, an einem Knoten (303) des Netzwerks (300);
Verwenden der Kandidaten-HF-Signatur zum Wählen eines Antennenmusters, das ein Maß eines maximalen Verhältnisses Signal zu Interferenz plus Rauschen am UE (301) bereitstellt, das vom Knoten (303) bedient wird, aus einem Satz wählbarer Antennenmuster einer Antenne (200, 210) des Knotens (303), von denen jeweilige den HF-Signaturen zugeordnet werden; und
Ändern eines Sendeprofils der Antenne (200, 210) mithilfe des gewählten Antennenmusters, wobei ein Antennenmuster gewählt wird, wenn ein Konfidenzmaß, das mit den jeweiligen des Satzes wählbarer Antennenmuster verbunden ist und ein Maß an Sicherheit darstellt, dass ein Antennenmuster optimal für die Kandidaten-HF-Signatur ist, größer ist als ein vorgegebener Schwellenwert.

2. Verfahren nach Anspruch 1, wobei Wählen eines Antennenmusters Vergleichen der Kandidaten-HF-Signatur mit einem Satz bisheriger HF-Signaturen beinhaltet, um eine Kandidatenübereinstimmung zu ermitteln.

3. Verfahren nach Anspruch 1, wobei Wählen eines Antennenmusters Durchgehen der wählbaren Antennenmuster der Antenne (200, 210) beinhaltet, um ein Antennenmuster für das UE (301) zu bestimmen, das eine maximale Signalstärke vom Knoten (303) bereitstellt.

4. Verfahren nach Anspruch 3, wobei das bestimmte Antennenmuster der Kandidaten-HF-Signatur des UE (301) zugeordnet wird und als Eingabe für einen Satz, der HF-Signaturen entsprechenden Antennenmustern zuordnet, bereitgestellt wird.

5. Verfahren nach einem der vorhergehenden Ansprüche, wobei der Knoten (303) dazu betreibbar ist, mehr als ein UE zu bedienen, und wobei ein Antennenmuster auf der Grundlage mehrerer HF-Signaturen gewählt wird, die am Knoten (303) empfangen werden, der den mehreren UEs entspricht.

6. Verfahren nach Anspruch 5, ferner umfassend Auswählen eines omnidirektionalen Betriebsmodus für die Antenne (200, 210), wenn die Anzahl der vom Knoten (303) bedienten UEs einen vorgegebenen Schwellenwert überschreitet.

7. Verfahren nach Anspruch 6, ferner umfassend Auswählen eines omnidirektionalen Betriebsmodus für die Antenne (200, 210), wenn die Anzahl der einzelnen Antennenmuster, die zur Bedienung aller Benutzer zu kombinieren sind, einen vorgegebenen Schwellenwert überschreitet.

8. Knoten (303) in einem Telekommunikationsnetzwerk (300), wobei der Knoten eine Antenne (200, 210) beinhaltet, die mehrere Antennenelemente (201a-d, 210a-d) mit jeweils verschiedenen Strahlrichtwirkungsprofilen umfasst, wobei der Knoten (303) zu Folgendem betreibbar ist:
Empfangen einer Kandidaten-HF-Signatur einer UE-Vorrichtung (301), die einen Messbericht für das UE (301) darstellt und Daten enthält, die eine Signalqualität empfangener Sendungen am UE (301) vom Knoten (303) und benachbarten Knoten (305a-e) des UE (301) darstellen;
Verwenden der Kandidaten-HF-Signatur zum Wählen eines Antennenmusters, das ein Maß eines maximalen Verhältnisses Signal zu Interferenz plus Rauschen am UE (301) bereitstellt, das vom Knoten (303) bedient wird, aus einem Satz wählbarer Antennenmuster der Antenne (200, 210), von denen jeweilige den HF-Signaturen zugeordnet werden, indem ein oder mehrere Antennenelemente zur Verwendung gewählt werden, wobei ein Antennenmuster gewählt wird, wenn ein Konfidenzmaß, das mit den jeweiligen des Satzes wählbarer Antennenmuster verbunden ist und ein Maß an Sicherheit darstellt, dass ein Antennenmuster optimal für die Kandidaten-HF-Signatur ist, größer ist als ein vorgegebener Schwellenwert.

9. Knoten (303) nach Anspruch 8, ferner dazu betreibbar, die wählbaren Antennenmuster (200, 210) durchzugehen, um ein Antennenmuster für das UE (301) zu bestimmen, das eine maximale Signalstärke vom Knoten (303) oder ein Maß eines maximalen Verhältnisses Signal zu Interferenz plus Rauschen am UE (301) bereitstellt, das vom Knoten (303) bedient wird.

10. Knoten (303) nach Anspruch 9 ferner betreibbar, um das bestimmte Antennenmuster der Kandidaten-HF-Signatur des UE zuzuordnen und das bestimmte Antennenmuster als Eingabe für einen Satz, der HF-Signaturen entsprechenden Antennenmustern zuordnet, bereitzustellen.

11. Telekommunikationsnetz (300), umfassend mindestens einen Knoten (303) mit einer Antenne (200, 210), die mehrere Antennenelemente (201a-d; 210a-d) mit jeweils verschiedenen Strahlrichtwirkungsprofilen umfasst, wobei der mindestens eine Knoten (303) zu Folgendem betreibbar ist:
Empfangen einer Kandidaten-HF-Signatur einer UE-Vorrichtung (301) des Netzes (300), die einen Messbericht für das UE (301) darstellt und Daten enthält, die eine Signalqualität empfangener Sendungen am UE (301) von dem mindestens einen Knoten (303) und benachbarten Knoten (305a-e) des UE (301) innerhalb des Netzes (300) darstellen; und
Verwenden der Kandidaten-HF-Signatur zum Wählen eines Antennenmusters, das ein Maß eines maximalen Verhältnisses Signal zu Interferenz plus Rauschen am UE (301) bereitstellt, das vom Knoten (303) bedient wird, aus einem Satz wählbarer Antennenmuster der Antenne (200, 210) des Knotens (303), von denen jeweilige den HF-Signaturen zugeordnet werden, indem ein oder mehrere Antennenelemente zur Verwendung gewählt werden, wobei ein Antennenmuster gewählt wird, wenn ein Konfidenzmaß, das mit den jeweiligen des Satzes wählbarer Antennenmuster verbunden ist und ein Maß an Sicherheit darstellt, dass ein Antennenmuster optimal für die Kandidaten-HF-Signatur ist, größer ist als ein vorgegebener Schwellenwert.

12. Computerprogrammprodukt, umfassend ein durch Computer nutzbares Medium mit einem darauf verkörperten Programmcode, wobei der computerlesbare Programmcode dazu geeignet ist, auf einem Computer ausgeführt zu werden, um ein Verfahren zur Verbesserung der Empfangssignalqualität an einer Benutzergerät-, UE, -Vorrichtung (301) nach einem der Ansprüche 1 bis 7 umzusetzen.

## Revendications

1. Procédé, dans un réseau de télécommunications (300), pour améliorer la qualité de signal reçu au niveau d'un dispositif d'équipement utilisateur, UE (301), comprenant :
la réception, au niveau d'un nœud (303) du réseau (300), d'une signature de radiofréquence, RF, candidate de l'UE (301) représentant un rapport de mesure pour l'UE (301) et comportant des données représentant la qualité de signal de transmissions reçues au niveau de l'UE à partir du nœud (303) et d'autres nœuds voisins (305a-e) de l'UE (301) ;
l'utilisation de la signature RF candidate pour sélectionner un diagramme d'antenne, qui fournit une mesure maximale du rapport signal/interférence plus bruit à l'UE (301) qui est desservi par le nœud (303), à partir d'un ensemble de diagrammes d'antenne sélectionnables d'une antenne (200, 210) du nœud (303), dont les diagrammes respectifs sont mappés avec des signatures RF ; et
la modification d'un profil de transmission de l'antenne (200, 210) en utilisant le diagramme d'antenne sélectionné, dans lequel un diagramme d'antenne est sélectionné lorsqu'une mesure de confiance associée à des diagrammes d'antenne respectifs de l'ensemble de diagrammes d'antenne sélectionnables, et représentant une mesure de certitude qu'un diagramme d'antenne est optimal pour la signature RF candidate, est supérieure à une valeur seuil prédéterminée.

2. Procédé selon la revendication 1, dans lequel la sélection d'un diagramme d'antenne comporte la comparaison de la signature RF candidate avec un ensemble de signatures RF précédentes pour déterminer une concordance candidate.

3. Procédé selon la revendication 1, dans lequel la sélection d'un diagramme d'antenne comporte la réalisation de cycles à travers les diagrammes d'antenne sélectionnables de l'antenne (200, 210) afin de déterminer un diagramme d'antenne pour l'UE (301) fournissant une intensité de signal maximale à partir du nœud (303).

4. Procédé selon la revendication 3, dans lequel le diagramme d'antenne déterminé est mappé avec la signature RF candidate de l'UE (301) et fourni comme entrée pour un ensemble mappant des signatures RF avec des diagrammes d'antenne correspondants.

5. Procédé selon l'une des revendications précédentes, dans lequel le nœud (303) peut fonctionner pour desservir plus d'un UE, et dans lequel un diagramme d'antenne est sélectionné sur la base de multiples signatures RF reçues au niveau du nœud (303) correspondant aux multiples UE.

6. Procédé selon la revendication 5, comprenant en outre la sélection d'un mode de fonctionnement omni directionnel pour l'antenne (200, 210) lorsque le nombre d'UE desservis par le nœud (303) dépasse une valeur seuil prédéterminée.

7. Procédé selon la revendication 6, comprenant en outre la sélection d'un mode de fonctionnement omni directionnel pour l'antenne (200, 210) lorsque le nombre de diagrammes d'antenne individuels à combiner pour desservir tous les utilisateurs dépasse une valeur seuil prédéterminée.

8. Nœud (303) dans un réseau de télécommunications (300), le nœud comportant une antenne (200, 210) comprenant de multiples éléments d'antenne (201a-d ; 210a-d) avec des profils de directivité de faisceau différents respectifs, dans lequel le nœud (303) peut fonctionner pour :
recevoir une signature RF candidate d'un dispositif d'UE (301) représentant un rapport de mesure pour l'UE (301) et comportant des données représentant la qualité de signal de transmissions reçues au niveau de l'UE (301) à partir du nœud (303) et de nœuds voisins (305a-e) de l'UE (301) ;
utiliser la signature RF candidate pour sélectionner un diagramme d'antenne, qui fournit une mesure maximale du rapport signal/interférence plus bruit à l'UE (301) qui est desservi par le nœud (303), à partir d'un ensemble de diagrammes d'antenne sélectionnables de l'antenne (200, 210), dont les diagrammes respectifs sont mappés avec des signatures RF en sélectionnant un ou plusieurs éléments d'antenne à utiliser, dans lequel un diagramme d'antenne est sélectionné lorsqu'une mesure de confiance associée à des diagrammes d'antenne respectifs de l'ensemble de diagrammes d'antenne sélectionnables, et représentant une mesure de certitude qu'un diagramme d'antenne est optimal pour la signature RF candidate, est supérieure à une valeur seuil prédéterminée.

9. Nœud (303) selon la revendication 8, pouvant en outre fonctionner pour réaliser des cycles à travers les diagrammes d'antenne sélectionnables de l'antenne (200, 210) pour déterminer un diagramme d'antenne pour l'UE (301) fournissant une intensité de signal maximale à partir du nœud (303) ou une mesure maximale du rapport signal/interférence plus bruit à l'UE (301) qui est desservi par le nœud (303).

10. Nœud (303) selon la revendication 9, pouvant en outre fonctionner pour mapper le diagramme d'antenne déterminé avec la signature RF candidate de l'UE et fournir le diagramme d'antenne déterminé comme entrée pour un ensemble mappant des signatures RF avec des diagrammes d'antenne correspondants.

11. Réseau de télécommunications (300) comprenant au moins un nœud (303) avec une antenne (200, 210) comprenant de multiples éléments d'antenne (201a-d ; 210a-d) avec des profils de directivité de faisceau différents respectifs, dans lequel le au moins un nœud (303) peut fonctionner pour :
recevoir une signature RF candidate d'un dispositif d'UE (301) du réseau (300) représentant un rapport de mesure pour l'UE (301) et comportant des données représentant la qualité de signal de transmissions reçues au niveau de l'UE à partir du au moins un nœud (303) et de nœuds voisins (305a-e) de l'UE (301) au sein du réseau (300) ; et
utiliser la signature RF candidate pour sélectionner un diagramme d'antenne, qui fournit une mesure maximale du rapport signal/interférence plus bruit à l'UE (301) qui est desservi par le nœud (303), à partir d'un ensemble de diagrammes d'antenne sélectionnables de l'antenne (200, 210), dont les diagrammes respectifs sont mappés avec des signatures RF en sélectionnant un ou plusieurs éléments d'antenne à utiliser, dans lequel un diagramme d'antenne est sélectionné lorsqu'une mesure de confiance associée à des diagrammes d'antenne respectifs de l'ensemble de diagrammes d'antenne sélectionnables, et représentant une mesure de certitude qu'un diagramme d'antenne est optimal pour la signature RF candidate, est supérieure à une valeur seuil prédéterminée.

12. Produit de programme informatique, comprenant un support utilisable par ordinateur dans lequel est incorporé un code de programme lisible par ordinateur, ledit code de programme lisible par ordinateur étant adapté pour être exécuté sur un ordinateur afin de mettre en œuvre un procédé pour améliorer la qualité de signal reçu au niveau d'un dispositif (301) d'équipement utilisateur, UE, selon l'une des revendications 1 à 7.
